# EUROPEAN PATENT APPLICATION

(11) **EP 3 936 899 A1**
(43) Date of publication of application: **12.01.2022**
(21) Application number: 20185270.4
(22) Date of filing: 10.07.2020
(51) Int. Cl.: G01T 1/04, G01T 7/02

(54) **DOSE MEASURING DEVICE FOR THE MEASUREMENT OF A RADIATION DOSE AND MEASUREMENT METHOD FOR DETERMINING THE RADIATION DOSE AP-PLIED DURING PASTEURIZATION AND/OR STERILIZATION OF PARTICULATE MATERIAL**

(71) Applicant: Bühler AG, 9240 Uzwil (CH)
(72) Inventor: Akepsimaidis, Georgios, 8003 Zürich (CH)
(74) Representative: Hepp Wenger Ryffel AG

(57) **Abstract**

Disclosed is a dose measuring device (51) for the measurement of a radiation dose which comprises a radiation-sensitive measuring film (62) and a base body (52), wherein the measuring film (62) is wound onto the base body (52) in some areas. Furthermore, a measurement method using such a dose measuring device (51) is disclosed to determine the radiation dose applied during the pasteurization and/or sterilization of particulate material (30).

## Description

The present invention relates to a dose measuring device according to claim 1 and a measurement method for determining the applied radiation dose according to claim 12.

Here and hereinafter inter alia, materials consisting of grains and/or flakes are designated as particulate (or free-flowing), wherein the particles, for example, can have a spherical, plate-shaped or angular shape. These can also be ground particles. As a result of the pasteurization and/or sterilization, for example, micro-organisms can be killed at least for the most part or made harmless. In particular, a reduction in harmful micro-organisms by at least one, preferably at least five, particularly preferably at least seven orders of magnitude can be achieved.

DE 10 2012 209 434 A1 discloses an apparatus which separates and sets in rotation a pourable product with the aid of a vibration conveying device and a rotating brush roller. The particles then pass through an electron field in a free-falling manner.

Known from EP 0 705 531 B1 is a further device in which seed material is introduced into a process chamber by means of a metering device not described in detail, in which process chamber the seed material drops perpendicularly through an electron beam.

The radiation dose applied to the particulate material by means of the electron beam must be sufficiently high that a sufficient pasteurization and/or sterilization of the treated material is ensured. At the same time, however, the radiation dose must not be so high that the particulate material undergoes damage during the treatment.

There is therefore a need to know the radiation dose effectively applied to the particulate material by means of an electron beam as precisely as possible.

Dose measuring devices (also known as dosimeters) can be used for this purpose. These dose measuring devices usually have a radiation-sensitive layer or a radiation-sensitive coating which, for examples, contains a radiation-sensitive dye. For example, the radiation-sensitive layer is transparent when unirradiated or has a first defined colouration. With increasing radiation dose, the radiation-sensitive layer changes colour. The value of the applied radiation dose can be determined from the degree of discolouration.

Known from DE 10 2004 022 071 A1 is a dose measuring film which can measure UV radiation and also electron radiation. The dose measuring film can be adhesively bonded onto a substrate.

EP 1 529 089 B1 discloses a radiation-sensitive device for monitoring the radiation dose which comprises a radiation-sensitive material in a polymeric binder and which is configured to be rod-shaped or block-like.

A disadvantage of these known dose measuring devices is that these are unsuitable for determining the radiation dose applied to particulate material.

Known from US 6,376,845 B1 is a removable dosimeter arranged centrally in a container in order to measure the radiation introduced in the centre of the container.

This dose measuring device is also unsuitable for determining the radiation dose applied to a large quantity of particulate material, in particular in an industrial application.

It is the object of the present invention to overcome the disadvantages known from the prior art. In particular, a dose metering device and a measurement method are to be provided, which is also suitable for measuring a radiation dose applied to the treated particulate material. Furthermore, the dose measuring device and the measurement method should be suitable for an industrial application.

These objects are achieved at least partially by the features of the independent claims. Further advantageous embodiments are obtained from combinations with the features of the corresponding subclaims and from the embodiments in the description and the figures.

The dose measuring device according to the invention for the measurement of a radiation dose comprises a radiation-sensitive measuring film and a base body, wherein the measuring film is wound onto the base body at least in certain areas.

The dose measuring device according to the invention is simple in structure and makes it possible to measure the applied radiation even in the case of a particulate, free-falling, material since this dose measuring device can flow in the material stream. Thus, the applied radiation can be determined at different positions in the material stream, not only on the outer side of the material stream.

Preferably the base body has at least one dimension which largely corresponds to at least one dimension of a particulate material to be treated, with the result that the measured values of the radiation are better comparable with the radiation values effectively applied to the treated material.

Preferably the base body has a cylinder-like section, wherein the measuring film is advantageously wound on the base body in this cylinder-like section. The measuring film can thus be wound simply onto the base body. In addition, a simpler positioning of the measuring film on the base body is ensured.

Preferably the base body has at least one guide section for guiding the measuring film during winding of the same onto the base body, with the result that a defined positioning of the measuring film during winding of the same on the base body is ensured.

Preferably two guide sections are provided on the base body, which simplifies the positioning of the measuring film during the winding of the same on the base body. Particularly advantageously the measuring film comes to lie between these two guide sections during winding of the same onto the base body, with the result that an exact positioning of the measuring film on the base body is ensured.

Preferably the base body is fabricated from a carbon-based material, preferably from a polymer so that the material properties and radiation absorption behaviour of the base body correspond to a carbon-based material or lie close to this. Advantageously the base body is fabricated from a polymer.

Preferably the base body is fabricated from a material having a density which largely corresponds to the density of the particulate material to be treated so that the material properties and radiation absorption behaviour of the base body correspond to the particulate material or lie close to this.

Preferably the base body is fabricated from a material whose chemical structure (composition) largely corresponds to the chemical structure (composition) of the particulate material to be treated so that the material properties and radiation absorption behaviour of the base body correspond to the particulate material or lie close to this.

Preferably the measuring film has a thickness of up to 200 µm, preferably of 10-50 µm so that sufficient material is available for the measurement of the applied radiation but the measuring film in the wound-on state is not excessively bulky.

Preferably the number of windings of the measuring film on the base body is from 1 to 20. In the case of several layers of the measuring film, in addition to the applied radiation dose, the degree of penetration of the radiation into the particulate material can also be simply determined. For this purpose, in particular 2 to 10 windings and particularly preferably 3 to 6 windings have proved successful.

Preferably at least one first fixing means is provided for fixing a first end of the measuring film on the base body so that the measuring film can be fixed on the base body before winding-on and the winding of the measuring film onto the base body is simplified. The at least one first fixing means comprises, for example, an adhesive layer or sticky layer, an adhesive strip or the like, provided at the first end of the measuring film.

Preferably at least one second fixing means is provided for fixing the second end of the measuring film so that the free end region of the measuring film can be fixed at least in some areas after winding on before an undesired unrolling. The at least one second fixing means comprises, for example, an adhesive layer or sticky layer, an adhesive strip or the like, provided at the first end of the measuring film.

In a further aspect, the invention also relates to a measurement method using a dose measuring device according to the aforesaid explanations to determine the radiation dose applied during pasteurization and/or sterilization of particulate material. The method comprises the following steps:
- Mixing the particulate material to be treated using several dose measuring devices to form a mixture, wherein advantageously a homogeneous mixture is strived for,
- Guiding the mixture past at least one electron beam, wherein the particulate material and also the dose measuring devices are exposed to the radiation from the electron source,
- Separating the dose measuring devices from the treated mixture, so that these are available for further analysis,
- Analyzing the irradiated measuring film wherein the analysis is preferably made in a calibrated dosimetry scanner and
- Determining the applied radiation dose.

By mixing the dose measuring devices with the particulate material, the radiation introduced by the electron source is detected in the entire material stream, i.e. not only on the outer side of the material stream but also inside the same.

Preferably before analyzing the irradiated measuring film (before step d)), the irradiated measuring film is removed from the base body with the result that the analysis of the same is easier to handle.

Preferably the number of dose measuring devices (step a)) added per kg of particulate material is 4 to 10, particularly preferably 6 to 8, with the result that a sufficiently precise determination of the radiation dose introduced onto the particulate material is ensured.

Preferably a transfer factor is determined in order to be able to determine the actual value from the determined value. With the transfer factor differences, for example, in the material properties or the radiation absorption behaviour of the dose measuring device and the particulate material can be easily taken into account. Advantageously this transfer factor is determined by means of a Monte Carlo simulation.

The at least one electron source can be known per se. The device can contain one or more electron sources. If several electron sources are provided, these can be arranged opposite one another or one after the other in relation to the flow direction of the material.

Furthermore, it is also feasible that the device has several treatment zones. In this way, an even more effective pasteurization and/or sterilization can be achieved, wherein the sum of the applied radiation is detected by the dose metering device according to the invention. Alternatively, the material can be guided several times through one and the same treatment zone.

For many materials, in particular for a plurality of spices it has proved advantageous if the material moves through the treatment zone at a speed which lies in the range from 1 m/s to 5 m/s, preferably from 2 m/s to 4 m/s, particularly preferably from 2.5 m/s to 3.5 m/s. The higher the speed of the material is, the higher the attainable throughput. In free fall the speed is independent of the throughput so that, for example, throughputs in the range of 100 kg/h to 1000 kg/h can be achieved at the same speed. In addition, the probability of collisions of particles with the electron source decreases with increasing speed of the material. On the other hand, however, the speeds must not be selected to be too high so that the material remains sufficiently long in the electron beam in order to be pasteurized and/or sterilized.

The electrons of the electron beam preferably have an energy which lies in the range from 80 keV to 300 keV, preferably from 140 keV to 280 keV, particularly preferably from 180 keV to 260 keV. Lower electron energies would not produce a sufficient pasteurization and/or sterilization. No substantially higher degrees of pasteurization and/or sterilization can be achieved by higher electron energies.

Advantageously the material is exposed to the electron beam for a treatment time which lies in the range from 5 ms to 25 ms. This is because a certain minimal treatment time is required for a sufficient pasteurization and/or sterilization. Too-long treatment times have not shown any significantly increased degree of pasteurization and/or sterilization and would additionally reduce the throughout and possibly damage the material.

Likewise advantageously the material is exposed to a radiation dose by means of the electron beam which lies in the range from 1 kGy to 15 kGy, preferably from 8 kGy to 13 kGy, particularly preferably from 10 kGy to 12 kGy.

The electron current density in the treatment zone preferably lies in the range from 10¹⁵ s⁻¹. cm⁻² to 2.77.10¹⁵ s⁻¹. cm⁻².

The particulate (or free-flowing) material can comprise foodstuffs such as, for example, cereals such as soya, breakfast cereals, snacks, nuts such as dried coconuts, almonds, peanut butter, cocoa beans, chocolate, chocolate liquid, chocolate powder, chocolate chips, cocoa products, legumes, coffee, seeds such as pumpkin seeds or sesame, spices (such as for example peppercorns, coriander or turmeric, in particular sliced), tea mixtures, dried fruits, pistachios, dry protein products, bakery products, sugar, potato products, pasta, baby food, dried egg products, soya products such as, for example, soya beans, thickening means, yeasts, yeast extracts, gelatine or enzymes.

Alternatively the material can also be animal fodder such as, for example, pellets, fodder for ruminants, poultry, aquatic animals (in particular fish) or pets, or mixed fodder.

However it is also feasible and lies within the framework of the invention that the material, for example, is a plastic such as PET, for example, in the form of flakes or pellets.

The invention is explained in detail hereinafter with reference to an exemplary embodiment and several drawings. In the figures:
- Figure 1:: shows a first perspective view of a device for pasteurizing and/or sterilizing particulate material;
- Figure 2:: shows a front view of the device shown in Figure 1 with opened doors;
- Figure 3:: shows a schematic side view of a part of the device shown in Figures 1 and 2;
- Figure 4:: shows a front view of a dose measuring device according to the invention;
- Figure 5:: shows a side view of a base body of a dose measuring device according to the invention;
- Figure 6:: shows a top view of a treated mixture of particulate material and several dose measuring devices;
- Figures 7-10:: show views of the dose measuring device before use in various assembly states;
- Figures 11-13:: show views of the dose measuring device after use in various assembly states.

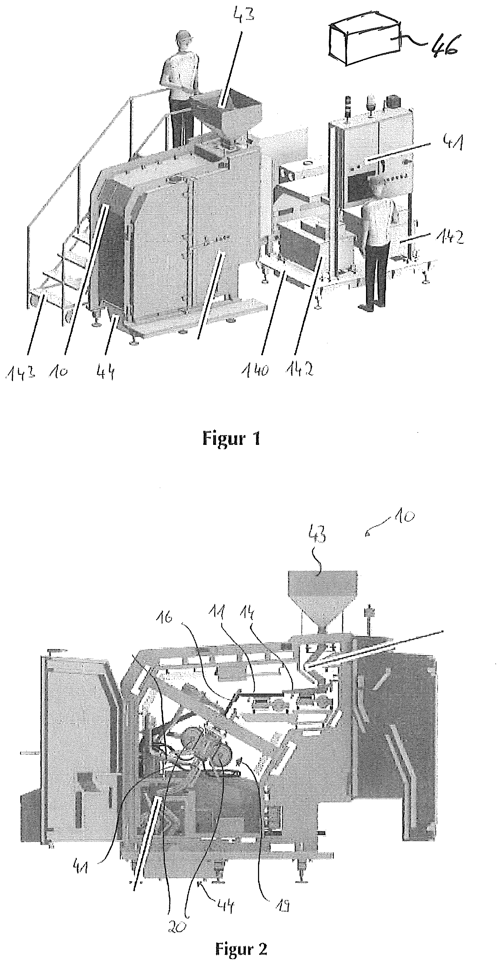

The device 10 shown in Figures 1 and 2 is provided for the pasteurization and/or sterilization of particulate material such as a spice, sesame, almonds or shelled pistachios. The device 10 contains an outer housing 40, a material inlet 43, a material outlet 44 and a material guide channel 41 in which the material can be guided from the material inlet 43 along a material guiding direction R through the device 10 to the material outlet 44. Located outside the outer housing 44 of the device 10 are an electrical frame 140 with an electric cabinet 141 and two generators 142 for supplying the subsequently described electron sources 20 and a pedestal 143. A mixing device 46 is provided by means of which the material 30 and several dose measuring devices 51 can be mixed before treatment of the same. The mixing device 46 can be part of the device 10 or - as shown here as an example - a separate device.

The device 10 furthermore contains according to Figure 2 a metering device not shown here by means of which the mixture can be metered onto a first vibration surface 14 which can be excited to vibrate. With the aid of this first vibration surface 14, the throughput of the mixture and therefore of the material 30 can be controlled and a pre-separation can also take place already. Downstream of the first vibration surface 14, the device 10 contains a second vibration surface 11 which can be excited to vibrate. By this means the mixture can be conveyed further downstream and separated. Located downstream of the vibration surface 11 is an inclined sliding surface 16.

Even further downstream, the device 10 contains a treatment zone 19. There the mixture of the material 30 and the plurality of dose measuring devices 51 are pasteurized and/or sterilized in a free-falling manner by means of an electron beam which is generated by two mutually opposite electron sources 20.

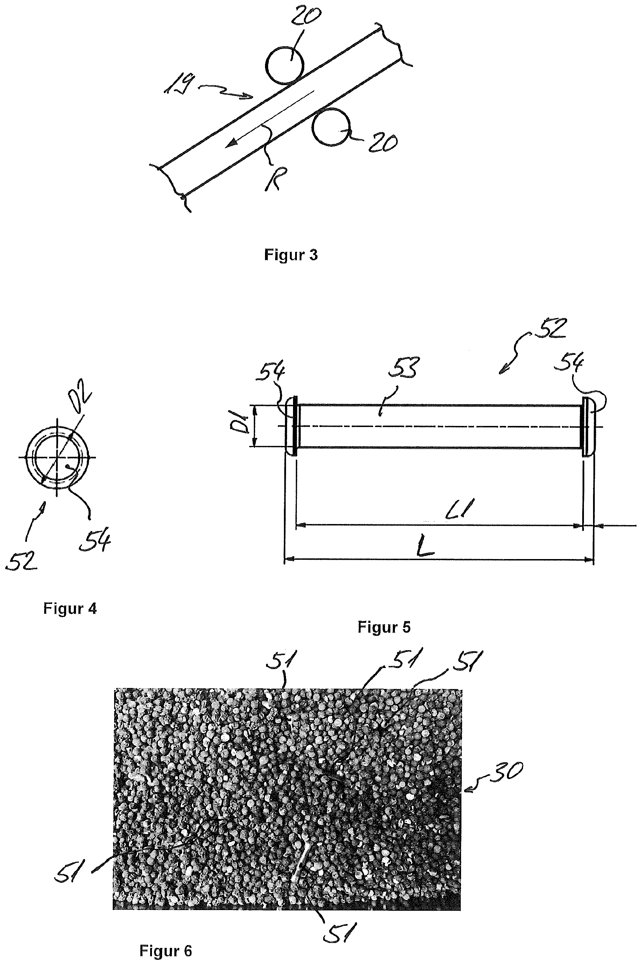

Figure 3 shows schematically a part of the device 10 according to the invention.

In the case of spices (e.g. peppercorns) the mixture advantageously moves at a speed of 3.0 m/s through the treatment zone 19. This speed can be adjusted by the length and the angle of inclination of the sliding surface 16. The electrons of the electron beam have an energy which lies in the range from 80 keV to 300 keV, for example, 250 keV. In the treatment zone 19, the electron beam has an average current density which lies in the range from 10¹⁵ s⁻¹. cm⁻² to 2.77.10¹⁵ s⁻¹. cm⁻². The mixture is exposed to the electron beam for a treatment time which can lie in the range from 15 ms to 25 ms and can, for example be 15 ms. As a result, the mixture or the material 30 is exposed to a radiation dose which can lie in the range from 1 kGy to 30 kGy and can, for example, be 12 kGy.

The dose measuring devices 51 distributed in the treated particulate material 30 (here peppercorns) can be seen in Figure 6.

The dose measuring device 51 according to the invention for the measurement of a radiation dose or parts thereof are shown in Figures 4 to 5 and 7 to 13 which show various states of the dose measuring device 51. The dose measuring device 51 and its use in connection with the pasteurization and/or sterilization of peppercorns as particulate material 30 is described hereinafter.

The dose measuring device 51 has a radiation-sensitive measuring film 62 and a base body 52.

The base body 52 has a cylindrical section 53 and at both ends thereof respectively one guide section 54 which project radially outwards beyond the cylindrical section 53. The measuring film 62 is wound onto the base body 52 at least in some areas in the region of the cylindrical section 53 and surrounds this with several layers.

In the present exemplary embodiment the ratio is approximately 1.2 to 1.6:1.0 between the external diameter D2 of the guide sections 54 and the external diameter D1 of the cylindrical section 53. The external diameter D1 of the cylindrical section 53 here is 3 mm, which approximately corresponds to the average diameter of a peppercorn. The ratio of the total length L of the base body 52 and the length L1 of the cylindrical section 53 is about 1.05 to 1.2:1.0. The length L1 of the cylindrical section 53 here is approximately more than 20 mm.

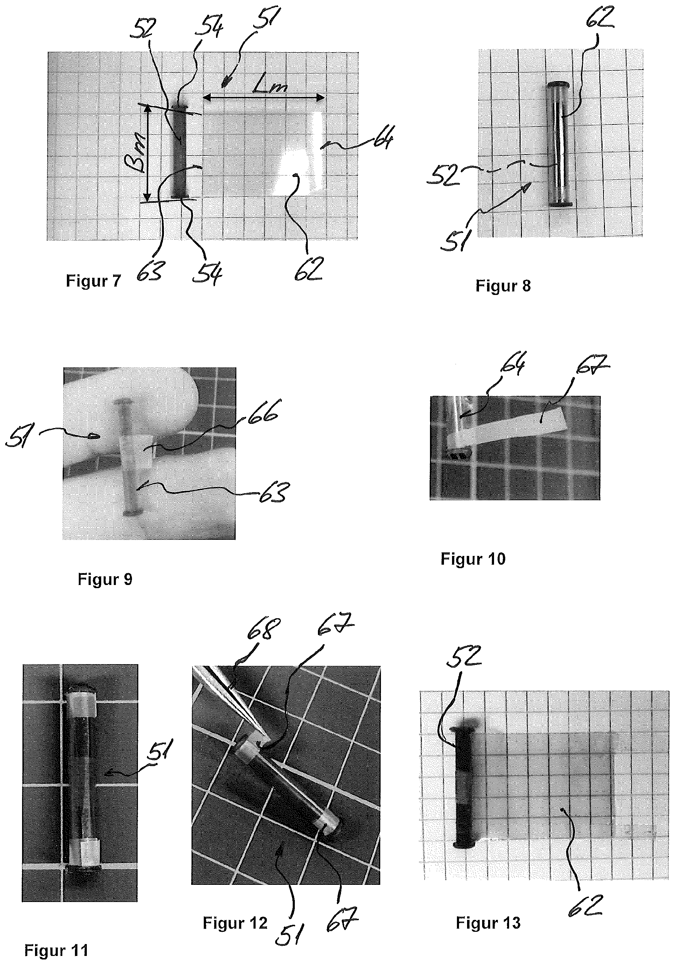

For the preparation of the dose measuring device 51 reference is essentially made hereinafter to Figures 7 to 10.

The base body 52 is fabricated from carbon-based material, preferably from a polymer, for example, in a 3D printing process. The material of the base body has a density which largely corresponds to the density of the particulate material 30 to be treated (here the density of a peppercorn). The chemical structure of the material of the base body largely corresponds to the chemical structure of the particulate material 30 to be treated (here the chemical structure of a peppercorn).

Before using the base body 52, this is tested for possible damage and if necessary, undesired projections are removed from the fabrication.

The measuring film 12 is optionally cut to the desired size. The width Bm of the measuring film 62 is advantageously selected in such a manner that the measuring film 62 comes to rest between the two guide sections 54 during winding onto the base body 52. The length Lm of the measuring film 62 is selected according to the desired number of windings or layers of the measuring film 62 which the dose measuring device 51 should ultimately have.

The radiation-sensitive measuring film 62 has a thickness of up to 200 µm, preferably of 10-50 µm. In the present exemplary embodiment, a Risø B3 Radiochromic Dosimeter Film made by Tesa^{®}, Hamburg is used as measuring film 62.

For the arrangement or for fixing of the measuring film 62 on the base body 52, a first end of the measuring film 62 can be provided by means of an adhesive strip as a first fixing means 66 (Figure 9). Alternatively the measuring film 62 is wound onto the base body 52 without fixing.

The number of windings of the measuring film 62 on the base body 52 is 1 to 20, preferably 2 to 10 and particularly preferably 3 to 6. The number of windings is, for example, dependent on the degree in which the accomplished penetration of the radiation into the material 30 is to be detected. With a view to the resulting results and the use of measuring film 62, for example, a number of three windings has proved advantageous.

The free-lying regions of the second end 64 of the measuring film 62 are here fixed with two fine adhesive strips as second fixing means 67 (Figure 10).

Advantageously the measuring film 62 is arranged between the windings on the base body 52 largely without air bubble inclusions or bends. If air bubble inclusions cannot be prevented, these should be kept as small as possible in order not to influence too strongly the evaluation of an irradiated dose measuring device 51.

The prepared dose measuring device 51 should be stored dry and in the dark, advantageously at room temperature before it is used.

A plurality of prepared dose measuring devices 51 are mixed with the particulate material 30 to be treated. Per kg of particulate material 30 to be treated, 4 to 50 dose measuring devices 51, preferably 8 to 30 dose measuring devices 51, particularly preferably 8 to 20 dose measuring devices 51 are added.

The mixture is passed by the electron beam which was generated by the electron sources 20, wherein the particulate material 30 as also the dose measuring devices 51 distributed in this material 30 are irradiated.

The dose measuring devices 51 (see Figure 6) located in the treated mixture are then separated from the same.

For the following analysis the irradiated measuring films 62 are advantageously removed or the irradiated dose measuring devices 51 are dismantled (see Figures 11 to 13).

By means of a suitable tool 68, e.g. tweezers, the two fixing means 67 are removed (Figure 12) and then the irradiated measuring film 62 is unwound (Figure 13).

The base body 52 can be fitted with a new measuring film for a further use (see Figures 7 to 10).

The introduced radiation dose is then determined by means of a suitable dosimetry scanner (not shown here). In order to taken into account system-dependent or material-dependent inaccuracies between the measured value determined in the analysis and the actual value of the radiation dose, a transfer factor is advantageously determined. The transfer factor is determined, for example, by means of a Monte Carlo simulation.

## Claims

1. Dose measuring device (51) for the measurement of a radiation dose comprising:
- a radiation-sensitive measuring film (62) and
- a base body (52), wherein
the measuring film(62) is wound onto the base body (52) at least in certain areas.

2. Dose measuring device according to Claim 1,
that the base body (52) has at least one dimension (D1) which largely corresponds to at least one dimension of a particulate material to be treated.

3. Dose measuring device according to Claim 1 or 2,
that the base body (52) has a cylinder-like section (53), wherein the measuring film (62) is advantageously wound on this cylinder-like section (53).

4. Dose measuring device according to one of the preceding claims,
that the base body (52) has at least one guide section (54) for guiding the measuring film (62) during winding of the same onto the base body (52), wherein two guide sections (54) are provide wherein advantageously the measuring film (62) lies between these two guide sections (54) after winding the same onto the base body (52).

5. Dose measuring device according to one of the preceding claims,
that the base body (52) is fabricated from a carbon-based material, preferably from a polymer.

6. Dose measuring device according to one of the preceding claims,
that the base body (52) is fabricated from a material having a density which largely corresponds to the density of the particulate material (30) to be treated.

7. Dose measuring device according to one of the preceding claims,
that the base body (52) is fabricated from a material whose chemical structure (composition) largely corresponds to the chemical structure (composition) of the particulate material (30) to be treated.

8. Dose measuring device according to one of the preceding claims,
that the measuring film (62) has a thickness of up to 200 µm, preferably of 10-50 µm.

9. Dose measuring device according to one of the preceding claims,
that the number of windings of the measuring film (62) on the base body (52) corresponds to 1 to 20, preferably 2 to 10 and particularly preferably 3 to 6.

10. Dose measuring device according to one of the preceding claims,
that at least one first fixing means (66) is provided for fixing a first end (63) of the measuring film (62) on the base body (52).

11. Dose measuring device according to one of the preceding claims,
that at least one second fixing means (67) is provided for fixing the second end (64) of the measuring film (62).

12. Measurement method using a dose measuring device (51) according to one of the preceding claims to determine the radiation dose applied during pasteurization and/or sterilization of particulate material (30) including the following steps:
a) Mixing the particulate material (30) to be treated using several dose measuring devices (51) to form a mixture,
b) Guiding the mixture past at least one electron beam,
c) Separating the irradiated dose measuring devices (51) from the treated mixture,
d) Analyzing the irradiated measuring film (62) and
e) Determining the applied radiation dose.

13. Method according to Claim 12,
wherein before analyzing the irradiated measuring film (62) (before step d)), the irradiated measuring film (62) is removed from the base body (52).

14. Method according to Claim 12 or 13,
wherein the number of dose measuring devices (51) (step a)) added per kg of particulate material (30) is 4 to 50, preferably 8 to 30, particularly preferably 8 to 20.

15. Method according to one of Claims 12 to 14, wherein a transfer factor is determined preferably by means of a Monte Carlo simulation for the determined to the actual value.
